# EUROPEAN PATENT APPLICATION

(11) **EP 4 790 554 A1**
(43) Date of publication of application: **12.08.2026**
(21) Application number: 25215596.5
(22) Date of filing: 13.11.2025
(51) Int. Cl.: G06F 9/46, G06F 9/48, G06F 9/54, G06Q 50/00

(54) **METHOD AND APPARATUS FOR MESSAGE PROCESSING BASED ON MESSAGE QUEUE SYSTEM, DEVICE, AND STORAGE MEDIUM**

(30) Priority: 08.02.2025 CN 202510142531
(71) Applicant: Beijing Volcano Engine Technology Co., Ltd., Beijing 100190 (CN)
(72) Inventor: Shen, Hui, Beijing, 100028 (CN); Zou, Haipeng, Beijing, 100028 (CN); Yang, Guodong, Beijing, 100028 (CN); Gong, Yunfei, Beijing, 100028 (CN); Gao, Changli, Beijing, 100028 (CN)
(74) Representative: Grünecker Patent- und Rechtsanwälte PartG mbB

(57) **Abstract**

Embodiments of the present disclosure relate to a method and apparatus for message processing based on a message queue system, a device, and a storage medium. The method includes: receiving a message withdrawal request, and determining a delayed message indicated to be withdrawn by the message withdrawal request as a message to be withdrawn, and recording the message to be withdrawn in a withdrawal message database, the withdrawal message database being configured to record a delayed message that is in a delayed message database and is the message to be withdrawn, and the delayed message database storing a delayed message with a delay time (S101); determining, in response to the delay time of the first delayed message in the delayed message database expiring, whether the withdrawal message database includes a first delayed message (S102); and in response to the withdrawal message database including the first delayed message, discarding the first delayed message (S103).

## Description

### FIELD

The present disclosure relates to the technical field of data processing, and in particular, to a method and apparatus for message processing based on a message queue system, a device, and a storage medium.

### BACKGROUND

A message is a communication mechanism used to transmit information between different systems, components, or services. A message queue system refers to a container that provides message storage and transmission functions. Each message queue in the message queue system has a corresponding producer and a corresponding consumer. A message produced by the producer may be a type of message that requires immediate consumption by the consumer or a type of message that requires consumption by the consumer after a specified delay time. Such a message that requires consumption by the consumer only after the specified delay time may be regarded as a delayed message.

Generally, in response to the delay time specified by the delayed message expiring, an event corresponding to the delayed message needs to be triggered for execution. However, in some cases, even if the delayed message expires, there is no need to perform the delayed message. For example, after the delayed message expires, there is no need to perform the event corresponding to the delayed message in terms of services. In this case, performing the delayed message then is a waste of system resources.

### SUMMARY

In order to solve the above technical problems or at least partially solve the above technical problems, the present disclosure provides a method and apparatus for message processing based on a message queue system, a device, and a storage medium.

In a first aspect, an embodiment of the present disclosure provides a method for message processing based on a message queue system, where the method includes:
receiving a message withdrawal request sent by a producer of a message queue in the message queue system, determining a delayed message indicated to be withdrawn by the message withdrawal request as a message to be withdrawn, and recording the message to be withdrawn in a withdrawal message database, the withdrawal message database being configured to record a delayed message that is in a delayed message database and is the message to be withdrawn, and the delayed message database storing a delayed message with a delay time;
determining, in response to a delay time of a first delayed message in the delayed message database expiring, whether the withdrawal message database includes the first delayed message; and
discarding the first delayed message in response to the withdrawal message database including the first delayed message.

In an optional implementation, the method further includes:
sending the first delayed message to a target message queue in response to the withdrawal message database not including the first delayed message, such that the first delayed message is read from the target message queue and is processed by a consumer of the target message queue.

In an optional implementation, the message withdrawal request carries a target service parameter used to indicate a withdrawal of a delayed message matching the target service parameter; and determining the delayed message indicated to be withdrawn by the message withdrawal request as the message to be withdrawn includes:
matching the target service parameter from the delayed message database, and determining a delayed message that is hit by the matching as the message to be withdrawn.

In an optional implementation, the message withdrawal request further carries an expiration time condition used to determine, based on an expiration time of a delayed message, the delayed message indicated to be withdrawn by the message withdrawal request, and determining the delayed message indicated to be withdrawn by the message withdrawal request as the message to be withdrawn includes:
matching the target service parameter from the delayed message database, and determining, as the message to be withdrawn, a delayed message of which an expiration time meets the expiration time condition in the delayed messages that are hit by the matching.

In an optional implementation, the method further includes:
receiving a second delayed message, and determining a physical node corresponding to the second delayed message from a distributed cluster based on a preset routing policy, as a first target physical node, each physical node in the distributed cluster being deployed with a withdrawal message database and a delayed message database, respectively; and
storing the second delayed message in a delayed message database on the first target physical node.

In an optional implementation, after receiving the message withdrawal request sent by the producer of the message queue in the message queue system, the method further includes:
determining a physical node corresponding to the message withdrawal request from the distributed cluster based on the preset routing policy, as a second target physical node; and
recording the message to be withdrawn in the withdrawal message database includes:
recording the message to be withdrawn in a withdrawal message database on the second target physical node.

In an optional implementation, determining the physical node corresponding to the delayed message from the distributed cluster based on the preset routing policy, as the first target physical node includes:
calculating a hash value based on the target service parameter in the second delayed message, and determining a hash node corresponding to the hash value on a preset hash ring, as a first target hash node, each hash node in the preset hash ring respectively having a corresponding hash value range and a corresponding physical node; and
determining a physical node corresponding to the first target hash node as the first target physical node.

In an optional implementation, determining the physical node corresponding to the message withdrawal request from the distributed cluster based on the preset routing policy, as the second target physical node includes:
calculating a hash value based on the target service parameter in the message withdrawal request, and determining a hash node corresponding to the hash value on the preset hash ring, as a second target hash node; and
determining, based on a historical physical node list corresponding to the second target hash node, a physical node corresponding to the second target hash node, as the second target physical node, the historical physical node list including a change record of the physical node corresponding to the second target hash node.

In an optional implementation, the method further includes:
receiving a third delayed message, and determining a physical node corresponding to the third delayed message from a distributed cluster based on a random policy, as a third target physical node, each physical node in the distributed cluster being deployed with a withdrawal message database and a delayed message database, respectively; and
storing the third delayed message in a delayed message database on the third target physical node.

In an optional implementation, after receiving the message withdrawal request, the method further includes:
broadcasting and distributing the message withdrawal request to each physical node in the distributed cluster, and querying, by each physical node, a delayed message database of each physical node to determine a physical node corresponding to the message withdrawal request, as a fourth target physical node; and
recording the message to be withdrawn in the withdrawal message database includes:
recording the message to be withdrawn in a withdrawal message database on the fourth target physical node.

In an optional implementation, the method further includes:
in response to a physical node having a correspondence with a third target hash node on a preset hash ring being changed from a fifth target physical node to a sixth target physical node, migrating data in a withdrawal message database and a delayed message database on the fifth target physical node to the sixth target physical node.

In a second aspect, the present disclosure provides an apparatus for message processing based on a message queue system, where the apparatus includes:
a first receiving module configured to receive a message withdrawal request sent by a producer of a message queue in the message queue system, determine a delayed message indicated to be withdrawn by the message withdrawal request as a message to be withdrawn, and record the message to be withdrawn in a withdrawal message database, the withdrawal message database being configured to record a delayed message that is in a delayed message database and is the message to be withdrawn, and the delayed message database storing a delayed message with a delay time;
a first determination module configured to determine, in response to the delay time of the first delayed message in the delayed message database expiring, whether the withdrawal message database includes a first delayed message; and
a discarding module configured to discard the first delayed message in response to the withdrawal message database including the first delayed message.

In a third aspect, an embodiment of the present disclosure further provides an electronic device, and the electronic device includes a processor; and a memory, configured to store instructions that executable by the processor. The processor is configured to read the executable instructions from the memory, and execute the instructions to implement the method for message processing based on the message queue system according to the embodiment of the present disclosure.

In a fourth aspect, an embodiment of the present disclosure further provides a computer-readable storage medium, and the storage medium stores computer programs. The computer programs are configured to perform the method for message processing based on the message queue system according to the embodiment of the present disclosure.

In a fifth aspect, the present disclosure provides a computer program product, and the computer program product includes computer programs/instructions which, when executed by a processor, implement the method described above.

Compared with the prior art, the technical solutions according to the embodiments of the present disclosure have the following advantages.

In the method for message processing based on the message queue system according to the embodiment of the present disclosure, first, a message withdrawal request sent by a producer of a message queue in the message queue system is received, a delayed message indicated to be withdrawn by the message withdrawal request is determined as a message to be withdrawn, and the message to be withdrawn is recorded in a withdrawal message database. The withdrawal message database is configured to record a delayed message that is in a delayed message database and is the message to be withdrawn, and the delayed message database stores a delayed message with a delay time. It is determined, in response to the delay time of the first delayed message in the delayed message database expiring, whether the withdrawal message database includes a first delayed message. In response to the withdrawal message database including the first delayed message, which indicates that the first delayed message has been withdrawn, and the first delayed message is discarded.

In the embodiment of the present disclosure, the delayed message indicated to be withdrawn by the message withdrawal request is recorded in the withdrawal message database, such that in response to the delayed message expiring for execution, it is determined, by querying the withdrawal message database, whether the delayed message has been withdrawn, and the delayed message is discarded in response to determining that the delayed message has been withdrawn. In this way, a withdrawal function for the delayed message is implemented, and waste of system resources caused by processing the delayed message is reduced.

### BRIEF DESCRIPTION OF THE DRAWINGS

The above and other features, advantages, and aspects of the embodiments of the present disclosure will become more apparent in combination with the drawings and with reference to the following specific implementations. Throughout the drawings, the same or similar reference numerals denote the same or similar elements. It should be understood that the drawings are schematic and that parts and elements are not necessarily drawn to scale.
Fig. 1 is a schematic diagram of a method for message processing based on a message queue system according to an embodiment of the present disclosure;
Fig. 2 is a schematic diagram of a relationship between a message queue system and a delayed message system according to an embodiment of the present disclosure;
Fig. 3 is a schematic diagram of a delayed message interaction protocol according to an embodiment of the present disclosure;
Fig. 4 is a schematic flowchart of another method for message processing based on a message queue system according to an embodiment of the present disclosure;
Fig. 5 is a schematic diagram of a preset hash ring and a physical node in a distributed cluster according to an embodiment of the present disclosure;
Fig. 6 is a schematic flowchart of another method for message processing based on a message queue system according to an embodiment of the present disclosure;
Fig. 7 is a schematic flowchart of processing of a delayed message and a withdrawal message request according to an embodiment of the present disclosure;
Fig. 8 is a schematic diagram of expanding a distributed cluster according to an embodiment of the present disclosure;
Fig. 9 is a schematic diagram of a structure of an apparatus for message processing based on a message queue system according to an embodiment of the present disclosure; and
Fig. 10 is a schematic diagram of a structure of a device for message processing based on a message queue system according to an embodiment of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. In addition, the method implementations may include additional steps and/or omit the steps shown. The scope of the present disclosure is not limited in this regard.

The term "include/comprise" and its variations used herein are open-ended inclusions, that is, "include/comprise but not limited to". The term "based on" is "at least partially based on". The term "one embodiment" means "at least one embodiment". The term "another embodiment" means "at least one another embodiment". The term "some embodiments" means "at least some embodiments". Related definitions of other terms are given in the following description.

It should be noted that concepts such as "first" and "second" mentioned in the present disclosure are only used to distinguish between different apparatuses, modules, or units, and are not used to limit an order or interdependence of functions performed by these apparatuses, modules, or units.

It should be noted that "one" and "a plurality of" mentioned in the present disclosure are illustrative rather than restrictive. Those skilled in the art should understand that unless otherwise explicitly specified in the context, they should be understood as "one or more".

The names of messages or information exchanged between a plurality of apparatuses in the implementations of the present disclosure are only for illustrative purposes, and are not intended to limit the scope of these messages or information.

A message is a communication mechanism used to transmit information between different systems, components, or services. A message queue system refers to a container that provides message storage and transmission functions. Each message queue in the message queue system has a corresponding producer and a corresponding consumer. A message produced by the producer may be a type of message that requires immediate consumption by the consumer or a type of message that requires consumption by the consumer after a specified delay time. Such a message that requires consumption by the consumer only after the specified delay time may be regarded as a delayed message.

In the prior art, a processing process of the delayed message may include steps such as sending the delayed message and consuming the delayed message upon expiration. For example, in an order timeout detection scenario, the delayed message may be used to cancel an order that has timed out after a specified time. Specifically, in response to a user placing an order, a delayed message "detecting whether the order has timed out" that is triggered 10 minutes later is sent to the message queue system. The message queue system is configured to process the delayed message "detecting whether the order has timed out" in response to the delayed message expiring.

However, in response to an event corresponding to the delayed message having been completed before the delayed message expires, for example, an order having been transacted, a detection on whether the order has timed out is still performed. In fact, it is meaningless to perform the detection on whether the order has timed out in a case that the event corresponding to the delayed message having been completed, and instead, system resources are wasted.

An embodiment of the present disclosure provides a method for message processing based on a message queue system. First, a message withdrawal request is received, a delayed message indicated to be withdrawn by the message withdrawal request is determined as a message to be withdrawn, and the message to be withdrawn is recorded in a withdrawal message database. The withdrawal message database is configured to record a delayed message that is in a delayed message database and is the message to be withdrawn, and the delayed message database stores a delayed message with a delay time. It is determined, in response to a delay time of a first delayed message in the delayed message database expiring, whether the withdrawal message database includes a first delayed message. In response to the withdrawal message database including the first delayed message, which indicates that the first delayed message has been withdrawn, the first delayed message is discarded.

In the embodiment of the present disclosure, the delayed message indicated to be withdrawn by the message withdrawal request is recorded in the withdrawal message database, such that in response to the delayed message expiring for execution, it is determined, by querying the withdrawal message database, whether the delayed message has been withdrawn, and the delayed message is discarded in response to determining that the delayed message has been withdrawn. In this way, a withdrawal function for the delayed message is implemented, and waste of system resources caused by processing the delayed message is reduced.

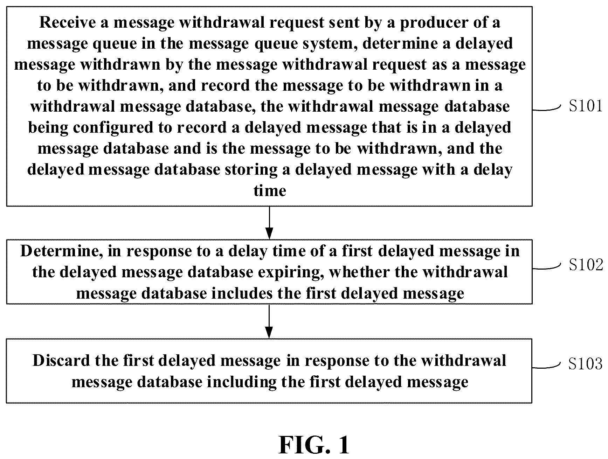

Based on this, an embodiment of the present disclosure provides a method for message processing based on a message queue system as shown in FIG. 1. Fig. 1 is a schematic flowchart of a method for message processing based on a message queue system according to an embodiment of the present disclosure. The method may be performed by an apparatus for message processing based on the message queue system. The apparatus may be implemented in software and/or hardware, and may generally be integrated into an electronic device. As shown in Fig. 1, the method includes the following steps.

At S101, a message withdrawal request sent by a producer of a message queue in the message queue system is received, a delayed message indicated to be withdrawn by the message withdrawal request is determined as a message to be withdrawn, and the message to be withdrawn is recorded in a withdrawal message database.

The withdrawal message database is configured to record a delayed message that is in a delayed message database and is the message to be withdrawn, and the delayed message database stores a delayed message with a delay time.

The method for message processing based on the message queue system according to the embodiment of the present disclosure may be applied to any physical node. The physical node may be any physical node in a distributed cluster, or may be a physical device independently deployed, etc.

The method for message processing based on the message queue system according to the embodiment of the present disclosure may be performed by the message queue system. Specifically, a delayed message system is deployed in the message queue system, and the method for message processing based on the message queue system according to the embodiment of the present disclosure is performed by the delayed message system deployed in the message queue system.

In the embodiment of the present disclosure, the message queue system refers to a system that provides message storage and transmission functions. After a message is sent to the message queue system, the message queue system needs to provide message routing for the message and ensure message delivery.

In the message queue system, a message produced by the producer of the message queue may be a type of message that requires immediate consumption by the consumer or a type of message that requires consumption by the consumer after a specified delay time. Such a delayed message that is consumed by the consumer after the specified delay time is usually processed by a delayed message system deployed in the message queue system. The delayed message system may be implemented as a submodule in the message queue system. The delayed message system exists as an independently expanded subsystem of the message queue system, and may implement processing of the delayed message.

In addition, the method for message processing based on the message queue system according to the embodiment of the present disclosure may also be implemented in the form of an external plugin, and the specific implementation form is not limited in the embodiment of the present disclosure.

In the embodiment of the present disclosure, the delayed message database is configured to store a delayed message with a delay time, and the delayed message allows the message to be consumed only after the specified delay time.

Each message queue in the message queue system has a corresponding producer and a corresponding consumer. The producer of the message queue is responsible for producing a message and writing the message into the message queue. For example, in response to a user placing an order, the producer may produce a delayed message "detecting whether the order has timed out" that is triggered 10 minutes later, and send the delayed message to the message queue. The consumer is configured to read the delayed message from the message queue and process the delayed message. In actual application, in response to the producer of the message queue in the message queue system delivering a delayed message, the delayed message usually carries information such as a delay time and a target service parameter. After receiving the delayed message that is sent by the producer and that carries the above information, the delayed message is first stored in the delayed message database.

The delayed message usually needs to be consumed only after the specified delay time is reached, but in some cases, these delayed messages may need to be cancelled or withdrawn. For example, in the order timeout detection scenario, in response to the user completing order payment or cancels the order within the delay time (for example, at the 2^{nd} minute), the delayed message "detecting whether the order has timed out" that is originally set to be triggered 10 minutes later needs to be withdrawn. In this case, the producer of the message queue in the message queue system may send a message withdrawal request to the delayed message system, to request the delayed message system to perform withdrawal processing on the set delayed message.

In the embodiment of the present disclosure, in response to the message withdrawal request sent by the producer of the message queue in the message queue system being received, a delayed message indicated to be withdrawn by the message withdrawal request is first determined as a message to be withdrawn, and the message to be withdrawn is recorded in the withdrawal message database.

In an optional implementation, the message withdrawal request may carry a target service parameter, and the target service parameter is a key attribute of the delayed message, and may be used to indicate withdrawal of a delay that matches the target service parameter. The target service parameter may include, for example, parameter information such as a product identifier and a user identifier, and a piece of delayed message or a type of delayed message may be determined using the target service parameter. Therefore, after the message withdrawal request is received, the target service parameter may be matched from the delayed message database, a delayed message that is hit by the matching is determined as the message to be withdrawn, and the message to be withdrawn is recorded in the withdrawal message database.

The withdrawal message database is configured to record a delayed message that is in the delayed message database and is the message to be withdrawn. In other words, a message recorded in the withdrawal message database refers to a delayed message that has been withdrawn, so that subsequently, in response to the delayed message in the delayed message database expiring for consumption, it may be determined, by querying whether the delayed message is recorded in the withdrawal message database, whether the delayed message has been withdrawn.

It may be seen that in the embodiment of the present disclosure, the target service parameter is carried in the message withdrawal request, such that subsequently, after the message withdrawal request is received, a delayed message that is in the delayed message database and that is hit by the matching with the target service parameter may be determined, based on the parsed target service parameter, as the message to be withdrawn.

In actual application, in a case that the message to be withdrawn that is hit by the matching with the target service parameter is determined from the delayed message database based on the target service parameter, a plurality of delayed messages with different delay times may exist simultaneously for the same target service parameter. In response to a withdrawal time range of the delayed message being not specified, all delayed messages that are hit by the matching are withdrawn.

Therefore, in the embodiment of the present disclosure, an expiration time condition may further be carried in the message withdrawal request, to withdraw, using the expiration time condition, a delayed message within a specified time range.

In the embodiment of the present disclosure, the expiration time condition is used to determine, based on an expiration time of a delayed message, the delayed message indicated to be withdrawn by the message withdrawal request. Exemplarily, it is assumed that the expiration time condition is to withdraw a delayed message of which an expiration time is less than 10 minutes. In this case, after a plurality of delayed messages that have the same target service parameter are hit by the matching, a delayed message of which an expiration time is less than 10 minutes in the plurality of delayed messages that are hit by the matching may be determined as the message to be withdrawn.

In the embodiment of the present disclosure, in response to the message withdrawal request being received, the message withdrawal request is first parsed, to obtain the expiration time condition and the target service parameter that are carried in the message withdrawal request. Then, the target service parameter is matched from the delayed message database, and a delayed message of which an expiration time meets the expiration time condition in the delayed messages that are hit by the matching is determined as the message to be withdrawn.

Exemplarily, it is assumed that the target service parameter carried in the message withdrawal request is user A, and the expiration time condition is expiration within 10 minutes. After the message withdrawal request is received, a delayed message that is in the delayed message database, that is matched with user A, and of which an expiration time corresponding to the delay time is less than 10 minutes may be determined as the message to be withdrawn, for example, message 1, of which a corresponding target service parameter is user A, and an expiration time corresponding to a delay time is 5 minutes; or message 2, of which a corresponding target service parameter is user A, and an expiration time corresponding to a delay time is 8 minutes.

At S102: it is determined, in response to the delay time of the first delayed message in the delayed message database expiring, whether the withdrawal message database includes the first delayed message.

In the embodiment of the present disclosure, since the delayed message stored in the delayed message database has delay time information, it may be determined, based on the delay time, whether the delayed message has expired. Specifically, it is determined, in response to detecting that the delay time of the first delayed message in the delayed message database has expired, whether the withdrawal message database includes the first delayed message.

At S103, the first delayed message is discarded in response to the withdrawal message database including the first delayed message.

In the embodiment of the present disclosure, since the withdrawal message database is configured to record a delayed message that is in the delayed message database and is the message to be withdrawn, in response to determining that the withdrawal message database includes the first delayed message, which indicates that the first delayed message has been withdrawn, and at this time, there is no need to process the first delayed message, specifically, the first delayed message may be discarded to avoid processing the first delayed message. Thereby resources for processing the withdrawn delayed message is saved, and the system performance is improved.

In an optional implementation, in response to determining that the withdrawal message database does not include the first delayed message, the first delayed message is sent to a target message queue, such that the first delayed message is read from the target message queue system and is processed by a consumer of the target message queue.

In actual application, in a publish/subscribe mode of the message queue system, the expired delayed message may be sent to a target subject *topic* in the target message queue, and the delayed message is processed using the target subject *topic.* The target *topic* allows a plurality of publishers to send delayed messages to the target subject *topic,* and a plurality of subscribers or consumers may receive the delayed messages by subscribing to the target *topic.* Since message publishing and consumption in the target *topic* are performed asynchronously, that is, the publisher of the message queue does not need to wait for a response from the subscriber or the consumer after sending a message, in the embodiment of the present disclosure, the expired delayed message is processed using the target subject, which may improve the processing efficiency of the delayed message.

In the method for message processing based on the message queue system according to the embodiment of the present disclosure, first, a message withdrawal request sent by a producer of a message queue in the message queue system is received, a delayed message indicated to be withdrawn by the message withdrawal request is determined as a message to be withdrawn, and the message to be withdrawn is recorded in a withdrawal message database. The withdrawal message database is configured to record a delayed message that is in a delayed message database and is the message to be withdrawn, and the delayed message database stores a delayed message with a delay time. It is determined, in response to the delay time of the first delayed message in the delayed message database expiring, whether the withdrawal message database includes a first delayed message. In response to the withdrawal message database including the first delayed message, which indicates that the first delayed message has been withdrawn, the first delayed message is discarded.

In the embodiment of the present disclosure, the delayed message indicated to be withdrawn by the message withdrawal request is recorded in the withdrawal message database, such that in response to the delayed message expiring for execution, it is determined, by querying the withdrawal message database, whether the delayed message has been withdrawn, and the delayed message is discarded in response to determining that the delayed message has been withdrawn. In this way, a withdrawal function for the delayed message is implemented, and waste of system resources caused by processing the delayed message is reduced.

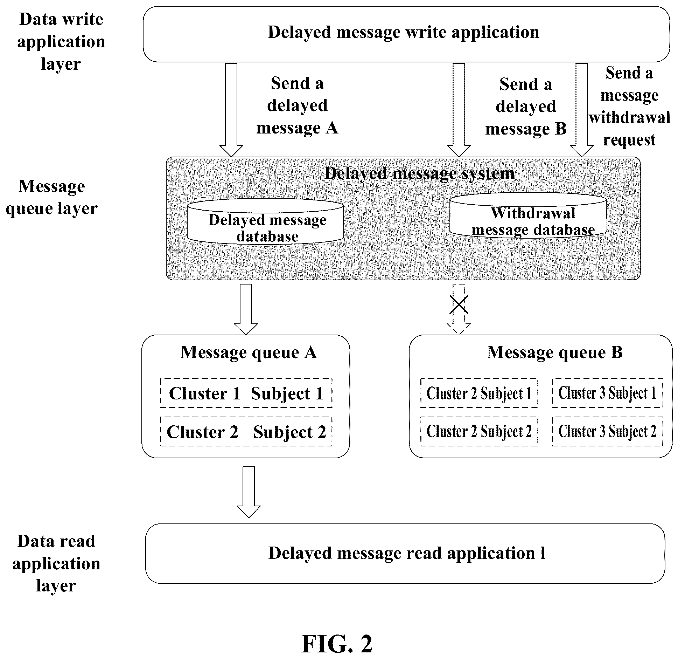

Fig. 2 is a schematic diagram of processing of a delayed message according to an embodiment of the present disclosure.

In response to a delayed message system receiving a delayed message A sent by a delayed message writing application, the delayed message A is written into a delayed message database. The delayed message database is configured to store a delayed message with a delay time. In response to the delay time of the delayed message A in the delayed message database expiring, in a case that the withdrawal message database does not include the delayed message A, the delayed message A is sent to a target message queue, for example, subject 1 in cluster 1 corresponding to message queue A. A delayed message reading application processes the delayed message A through subject 1 in cluster 1 corresponding to the message queue A.

In response to the delayed message system receiving a delayed message B sent by the delayed message writing application, the delayed message B is written into the delayed message database. In response to the delay time of the delayed message B expiring, in a case that it is determined that the withdrawal message database includes the delayed message B, the delayed message B is discarded, that is, the delayed message B is not processed.

In an optional implementation, the delayed message may carry a delay time, a target service parameter, processing object location information, and the like. The processing object location information may include information such as a message queue type, a message queue cluster, and a target subject name, and the processing object location information is used to determine, after the delayed message expires, the target message queue into which the delayed message is written, or the target subject in the target message queue.

As shown in Fig. 2, the delayed message database stores a plurality of delayed messages. In response to detecting that the delay time of the first delayed message in the delayed message database expires, in a case that it is determined that the withdrawal message database does not include the first delayed message, the target message queue or the target subject for processing the delayed message is first determined based on the processing object location information carried in the delayed message. Exemplarily, it is assumed that the delayed message carries information about message queue A. In this case, the message queue A is determined as the target message queue, and the first delayed message is sent to the target message queue, such that the first delayed message is read from the target message queue and is processed by the consumer of the target message queue. For another example, it is assumed that the delayed message carries information such as message queue A, cluster 1, and subject 1. In this case, subject 1 in the cluster 1 corresponding to a type of the message queue A may be determined as the target subject, and the first delayed message is sent to the target subject 1, to process the first delayed message on the target subject 1.

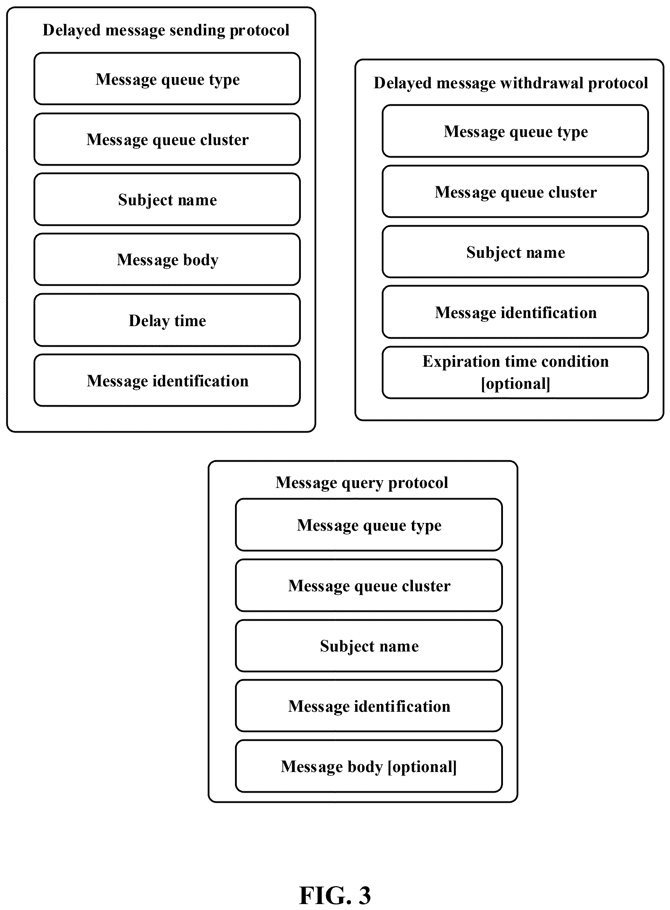

Fig. 3 is a schematic diagram of a delayed message interaction protocol according to an embodiment of the present disclosure. The interaction protocol may include a delayed message sending protocol, a delayed message withdrawal protocol, and a delayed message query protocol. The delayed message sending protocol is used to specify a message attribute carried in a delayed message, to implement sending of the delayed message. The delayed message withdrawal protocol is used to specify information carried in a message withdrawal request. The delayed message query protocol is used to specify information carried in a query request used to query a delayed message.

The delayed message withdrawal protocol shown in Fig. 3 specifies that the message withdrawal request may carry information such as a message queue type, a message queue cluster, a subject name, and a target service parameter, and the like. Optionally, the message withdrawal request may further carry an expiration time condition, and based on the expiration time condition and the target service parameter, a delayed message that has the same target service parameter and that has an expiration time corresponding to the delay time and that meets the expiration time condition may be determined.

In an optional implementation, a plurality of delayed messages may be included simultaneously under the same target service parameter, and each of the delayed messages has a different delay time. The user needs to know a specific expiration time to determine which delayed message to withdraw.

Therefore, the embodiment of the present disclosure further provides an interface for querying different message states of the target service parameter used to query the expiration time of the delayed message. As shown in Fig. 3, the delayed message query protocol specifies that the query request may carry information such as a message queue type, a message queue cluster, a subject name, and a target service parameter, and the like.

In actual application, a distributed cluster may be used to implement the method for message processing based on the message queue system according to the embodiment of the present disclosure. Each physical node in the distributed cluster may be referred to as a Group shard, each Group shard runs independently, and data written by the user is distributed in different Group shards. Data written by the user is segmented and then stored on a plurality of different physical nodes, which may improve data load balance of the distributed cluster.

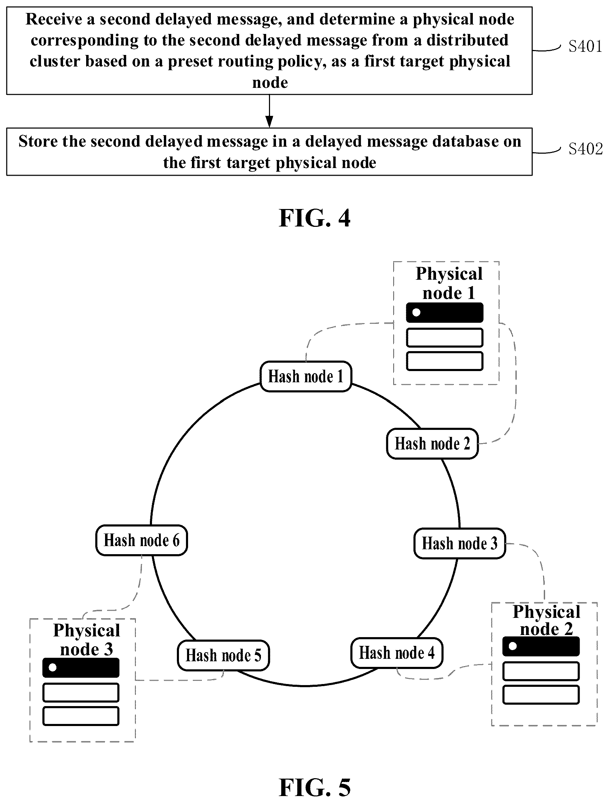

Based on this, an embodiment of the present disclosure further provides a method for message processing based on a message queue system. Fig. 4 is a schematic flowchart of another method for message processing based on a message queue system according to an embodiment of the present disclosure. The method includes the following steps.

At S401, a second delayed message is received, and a physical node corresponding to the second delayed message is determined from a distributed cluster based on a preset routing policy, as a first target physical node.

In the embodiment of the present disclosure, the physical node of the distributed cluster is deployed with a delayed message database and a withdrawal message database, respectively. The delayed message database is configured to store a delayed message with a delay time, and the withdrawal message database is configured to record a delayed message that is in the delayed message database and that has been withdrawn.

In the embodiment of the present disclosure, in response to the second delayed message being received, a physical node corresponding to the second delayed message is first determined from the distributed cluster based on the preset routing policy, as the first target physical node.

The preset routing policy may include a consistent hash distribution policy. The consistent hash distribution policy may be used to ensure that delayed messages having the same target service parameter may fall on the same physical node. In response to the second delayed message being received, the first target physical node corresponding to the second delayed message may be determined from the distributed cluster based on the preset routing policy. The preset routing policy is not specifically limited in the embodiment of the present disclosure. The preset routing policy may be any policy that may implement the foregoing determination of the physical node corresponding to the second delayed message from the distributed cluster, for example, including a range allocation policy, a random distribution policy, a geographic location-aware distribution policy, a weight allocation policy, a module allocation policy, a time partition policy or the like.

In actual application, a hash ring may further be used to implement load balance of delayed messages, such that data may be more evenly distributed to each physical node in the distributed cluster.

In an optional implementation, after the second delayed message is received, a hash value may further be calculated based on a target service parameter in the second delayed message, and a hash node corresponding to the hash value on a preset hash ring is determined as a first target hash node.

The hash ring is a data structure used for data distribution and load balance in a distributed system, and is applicable to a scenario in which a large amount of data is evenly distributed to a plurality of nodes. For example, in the scenario of the distributed cluster, each hash node in the preset hash ring respectively has a corresponding hash value range and a corresponding physical node.

Fig. 5 is a schematic diagram of a preset hash ring and physical nodes in a distributed cluster according to an embodiment of the present disclosure. The distributed cluster includes physical node 1, physical node 2, and physical node 3. Each physical node corresponds to one or more hash nodes in the preset hash ring. Specifically, physical node 1 includes hash node 1 and hash node 2, physical node 2 includes hash node 3 and hash node 4, physical node 3 includes hash node 5 and hash node 6, and a hash value range of hash node 1 is 0x000000 to 0x222222.

It may be seen that in the embodiment of the present disclosure, the hash value of the target service parameter in the second delayed message is calculated, and the physical node corresponding to the first target hash node on the preset hash ring is determined, based on the hash value, as the first physical node corresponding to the second delayed message, such that delayed messages having the same target service parameter may be routed to the same physical node.

In addition, after the first target hash node corresponding to the second delayed message and the first target physical node corresponding to the first target hash node are determined, both a correspondence between the target service parameter of the second delayed message and the first target hash node and a correspondence between the first target hash node and the first target physical node may be saved in a metadata engine of the delayed message system.

It may be seen that in the embodiment of the present disclosure, the correspondence between the target service parameter and the hash node and the correspondence between the hash node and the physical node in the distributed cluster are saved, such that the hash node where the delayed message is located may be quickly located subsequently, thereby improving data access efficiency. In addition, by saving the above correspondences, a large amount of traversal and search operations in a process of data storage and retrieval may be avoided, such that data access is faster and more accurate.

At S402, the second delayed message is stored in a delayed message database on the first target physical node.

In the embodiment of the present disclosure, after the first target physical node corresponding to the second delayed message is determined, the second delayed message is stored in the delayed message database on the first target physical node, such that writing the delayed message into the delayed message database is implemented.

It may be seen that in the embodiment of the present disclosure, in response to the second delayed message being received, the delayed message is stored in the delayed message database on the first target physical node, such that subsequently, in response to the message withdrawal request being received, the delayed message indicated to be withdrawn by the message withdrawal request may be determined by querying the delayed message database.

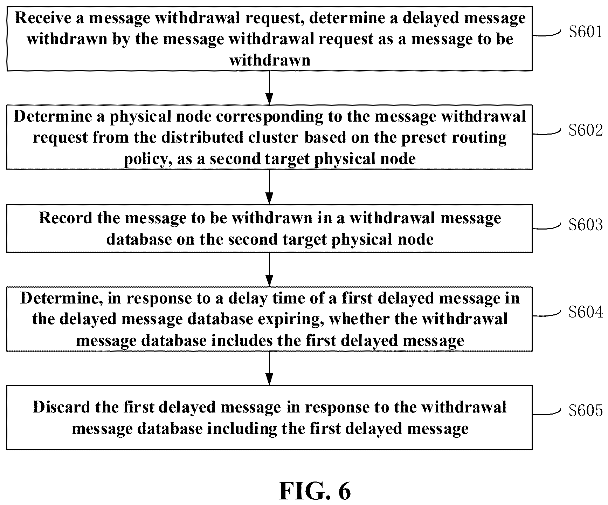

Based on the foregoing embodiments, an embodiment of the present disclosure further provides a method for message processing based on a message queue system. Fig. 6 is a schematic flowchart of another method for message processing based on a message queue system according to an embodiment of the present disclosure. The method includes the following steps.

At S601, a message withdrawal request is received, and a delayed message indicated to be withdrawn by the message withdrawal request is determined as a message to be withdrawn.

In the embodiment of the present disclosure, the message withdrawal request may carry a target service parameter, and the target service parameter is a key attribute of the delayed message, and may be used to indicate withdrawal of a delayed message that is matched with the target service parameter, for example, a parameter value such as a product identifier and a user identifier. Therefore, after the message withdrawal request is received, the target service identifier may be matched from the delayed message database, the delayed message that is hit by the matching is determined as the message to be withdrawn, and the message to be withdrawn is recorded in the withdrawal message database.

It may be seen that in the embodiment of the present disclosure, the target service parameter is carried in the message withdrawal request, such that subsequently, after the message withdrawal request is received, a delayed message that is in the delayed message database and that is hit by the matching with the target service parameter may be determined, based on the parsed target service parameter, as the message to be withdrawn.

At S602, a physical node corresponding to the message withdrawal request is determined from the distributed cluster based on the preset routing policy, as a second target physical node.

In the embodiment of the present disclosure, after the first target physical node corresponding to the second delayed message is determined based on the preset routing policy and the second delayed message is stored in the delayed message database on the first target physical node, in response to the message withdrawal request being received, a physical node corresponding to the message withdrawal request may further be determined from the distributed cluster based on the preset routing policy, as the second target physical node. Then, the message to be withdrawn is recorded in the withdrawal message database on the second target physical node.

It may be seen that in the embodiment of the present disclosure, by using the same preset routing policy, it may be ensured that the delayed message and the withdrawal message have consistency in the processing process, thereby reducing a problem of message routing errors caused by inconsistent routing policies and improving reliability of delayed message processing.

At S603, the message to be withdrawn is recorded in a withdrawal message database on the second target physical node.

In the embodiment of the present disclosure, after the physical node corresponding to the message withdrawal request is determined from the distributed cluster based on the preset routing policy as the second target physical node, the message to be withdrawn is recorded in the withdrawal message database on the second target physical node.

In another optional implementation, in response to the message withdrawal request being received, the delayed message withdrawn by the message withdrawal request may first be determined as the message to be withdrawn. Then, a hash value is calculated based on the target service parameter in the message withdrawal request, and a hash node on the preset hash ring that corresponds to the hash value of the target service parameter is determined as the second target physical node.

At S604, in response to a delay time of a first delayed message in the delayed message database expiring, it is determined whether the withdrawal message database includes the first delayed message.

In the embodiment of the present disclosure, since the delayed message stored in the delayed message database has the delay time information, it may be determined whether the delayed message expires based on the delay time. Specifically, in response to detecting that the delay time of the first delayed message in the delayed message database expires, it is determined whether the withdrawal message database includes the first delayed message.

At S605, the first delayed message is discarded in response to the withdrawal message database including the first delayed message.

In the embodiment of the present disclosure, since the withdrawal message database is configured to record a delayed message that is in the delayed message database and is the message to be withdrawn, in response to determining that the withdrawal message database includes the first delayed message, it indicates that the first delayed message has been withdrawn, and at this time, there is no need to process the first delayed message. Specifically, the first delayed message may be discarded to avoid processing the first delayed message, thereby saving resources for processing the withdrawn delayed message, and improving system performance.

In actual application, in a process of implementing delayed message processing by using the distributed architecture, a random policy may further be used to determine a corresponding physical node for the delayed message from the distributed cluster.

In the embodiment of the present disclosure, first, a third delayed message is received, and a physical node corresponding to the third delayed message is determined from the distributed cluster based on the random policy, as a third target physical node. Each physical node in the distributed cluster is deployed with a withdrawal message database and a delayed message database, respectively.

In the embodiment of the present disclosure, after the third target physical node corresponding to the third delayed message is determined, the third delayed message is stored in the delayed message database on the third target physical node.

In actual application, after the message withdrawal request is received, it is further necessary to determine, from the distributed cluster, a physical node corresponding to the withdrawal message request, such that subsequently, the delayed message indicated to be withdrawn by the message withdrawal request may be recorded in the withdrawal message database. In the embodiment of the present disclosure, in response to the delayed message being stored, a physical node may be randomly selected to store the delayed message, and subsequently, in response to the delayed message being withdrawn, it may not be determined which physical node the delayed message specifically exists on.

Therefore, in the embodiment of the present disclosure, after the message withdrawal request is received, the message withdrawal request may further be broadcast and distributed to each physical node in the distributed cluster, and each physical node queries a delayed message database of each physical node to determine a physical node corresponding to the message withdrawal request and uses the physical node as a fourth target physical node. After the fourth target physical node corresponding to the message withdrawal request is determined, the message to be withdrawn corresponding to the message withdrawal request is recorded in the withdrawal message database on the fourth target physical node.

It may be seen that in the embodiment of the present disclosure, in the scenario where delayed message processing is implemented by using the distributed architecture, the random policy may be used to determine, from the distributed cluster, the corresponding physical node for the received delayed message, to store the delayed message. In addition, in response to the withdrawal message request being received, the withdrawal message request may be broadcast and distributed to each physical node in the distributed cluster, such that each physical node queries a delayed message database of each physical node to determine the corresponding physical node for the withdrawal message request, to record the message to be withdrawn corresponding to the message withdrawal request in the withdrawal message database of the physical node.

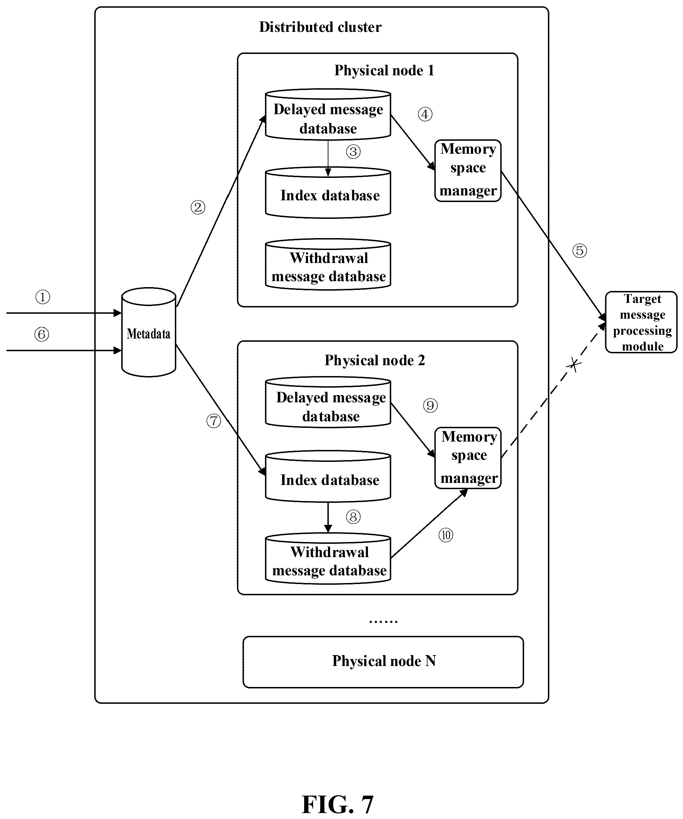

In actual application, the delayed message engine is an engine in the delayed message system that is configured to process the delayed message and the withdrawal message request. The delayed message engine may adopt the distributed architecture, where the distributed cluster may include a plurality of physical nodes, and each physical node may further be respectively deployed with the delayed message database, the withdrawal message database, the index database, and the memory space manager. Fig. 7 is a schematic diagram of a processing flowchart of a delayed message and a withdrawal message request according to an embodiment of the present disclosure. The memory space manager is configured to load a delayed message with an expired delay time into a target message processing module, to process the expired delayed message on the target message processing module.

① In response to a delayed message A sent by the producer of the message queue in the message queue system being received, first, a physical node corresponding to the delayed message A, for example, physical node 1, is determined from the distributed cluster based on the preset routing policy recorded in the metadata. ② The delayed message A is written into the delayed message database on the physical node 1. ③ Then, corresponding index information is constructed for the delayed message A, and the index information corresponding to the delayed message A is written into the index database.

④ In response to detecting that the delay time of the delayed message A in the delayed message database expires, the memory space manager on the physical node 1 first determines whether the withdrawal message database includes the delayed message A. ⑤ In response to determining that the withdrawal message database does not include the delayed message A, the delayed message A is sent to the target message queue, such that the first delayed message is read from the target message queue and is processed by the consumer of the target message queue.

⑥ In response to the message withdrawal request being received, first, a physical node corresponding to the message withdrawal request, for example, physical node 2, is determined from the distributed cluster based on the preset routing policy recorded in the metadata. ⑦ Then, the index database is queried, based on the target service parameter carried in the message withdrawal request, for a delayed message having the same target service parameter, and the delayed message having the same target service parameter is determined as the message to be withdrawn. ⑧ The message to be withdrawn is recorded in the withdrawal message database.

⑨ In response to detecting that the delay time of a delayed message B in the delayed message database expires, the memory space manager on the physical node 2 determines whether the withdrawal message database includes the delayed message B. ⑩ In response to the withdrawal message database including the delayed message B, the delayed message B is discarded.

In a preferred implementation, to further improve read/write performance and access performance of the database, the delayed message data, the withdrawal message database, and the index database that are deployed on the physical node may further be provided with capabilities such as key-value storage. For example, components such as redis, rocksdb, leveldb, and hbase may be used to implement the key-value storage capability of each of the foregoing databases.

In an optional implementation, the metadata of the delayed message system further records hash node information, physical node information, and a mapping association record between the physical node and the hash node. The hash node information may include quantity information of hash nodes on the preset hash ring and a hash value range corresponding to each hash node. The hash value range corresponding to the hash node is recorded, such that the physical node corresponding to the delayed message may be determined subsequently based on the hash value of the target service parameter. The physical node information refers to information about each physical node in the distributed cluster, for example, an IP address and available disk information.

The mapping association record between the physical node and the hash node is used to record a hash node allocated to each physical node, and each physical node may be associated with one or more hash nodes. The physical node may have a capacity expansion operation or a capacity reduction operation. Therefore, the mapping association record records each hash node allocation for the physical node.

In the embodiment of the present disclosure, the database in each physical node in the distributed cluster is a key-value database. Since the key-value database stores data in the form of key-value pairs, the data access speed is fast, thereby improving the processing performance of the delayed message.

In an optional implementation, the data structure of the delayed message may include key-value data, where the key data of the delayed message may include fields such as a hash node number, an expiration time, a delay time, a message queue type, a message queue cluster, a subject name, and a target service parameter, and the value data of the delayed message may include data written by the service.

Since the key database of the delayed message includes the expiration time information, after the delayed message is received, sorting may be performed in the delayed message database based on the hash node number and the expiration time in the key data of the delayed message through a dictionary of the key data, such that the latest delayed message stored in the delayed message database is the message that expires recently, so that the delayed message system may determine whether the delayed message expires by reading the expiration time.

In actual application, after the delayed message is written into the delayed message database, a corresponding index may further be generated for the delayed message, and the index is written into the index database. The delayed message index structure stored in the index database may include key-value data. The key data in the delayed message index may include fields such as a hash node number, a target service parameter, a message queue type, a message queue cluster, a subject name, and an expiration time, and the value data in the delayed message index may be the key data of the delayed message. Subsequently, in response to the message withdrawal request being received, the delayed message indicated by the message withdrawal request may be determined as the message to be withdrawn by querying the index database and the delayed message database.

The withdrawal message database is configured to record a delayed message that is in the delayed message database and is the message to be withdrawn. The data structure in the withdrawal message database may include key-value data, where the key data may include fields such as a hash node number, a target service parameter, a message queue type, a message queue cluster, a subject name, and an expiration time, and the value data may be the key data of the delayed message.

The delayed message system reads data in the withdrawal message database while reading the delayed message database, such that the correct target service parameter may be read in response to the delayed message being sent to the target message queue.

It may be seen that in the embodiment of the present disclosure, the delayed message indicated to be withdrawn by the message withdrawal request is recorded in the withdrawal message database, such that in response to the delayed message expiring for execution, it is determined, by querying the withdrawal message database, whether the delayed message has been withdrawn, and the delayed message is discarded in response to determining that the delayed message has been withdrawn. In this way, the withdrawal function for the delayed message is implemented, and waste of system resources caused by processing the delayed message is reduced.

In actual application, to optimize resource allocation of the distributed cluster and improve resource utilization, a capacity expansion operation or a capacity reduction operation is frequently performed on the physical node in the distributed cluster. The capacity expansion operation refers to increasing the number of physical nodes in the distributed cluster to improve the processing capability of the distributed cluster. The capacity reduction operation refers to reducing the number of physical nodes in the distributed cluster to reduce unnecessary resource usage, thereby reducing costs.

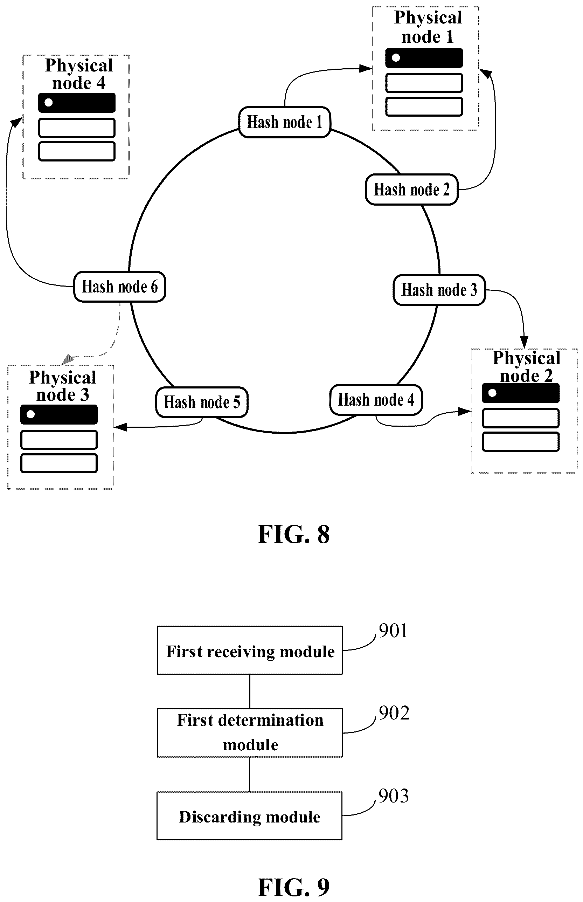

Fig. 8 is a schematic diagram of capacity expansion of a distributed cluster according to an embodiment of the present disclosure. The original distributed cluster includes physical node 1, physical node 2, and physical node 3. Physical node 1 corresponds to hash node 1 and hash node 2, physical node 2 corresponds to hash node 3 and hash node 4, and physical node 3 corresponds to hash node 5 and hash node 6. After physical node 4 is added, the mapping association between hash node 6 and physical node 3 is removed, and hash node 6 is reassigned to the new physical node 4. In this way, the capacity expansion operation of the distributed cluster is implemented.

In response to the capacity expansion operation or the capacity reduction operation being performed on the physical node in the distributed cluster, data inconsistency may occur. Exemplarily, in response to the delayed message being received, it is assumed that in response to the hash value being calculated based on the target service parameter in the delayed message, the physical node corresponding to hash node 6, that is, physical node 3, is determined as the physical node corresponding to the delayed message. At this time, in response to the capacity expansion operation shown in Fig. 8 occurring, subsequently, in response to the message withdrawal request corresponding to the delayed message being received, the hash value is calculated based on the target service parameter in the message withdrawal request, and the determined physical node corresponding to hash node 6 is the new physical node 4.

Therefore, to maintain data consistency in the distributed cluster, the embodiment of the present disclosure may further use a node capacity expansion manner based on data migration to manage data in each physical node on the distributed cluster.

In the embodiment of the present disclosure, in response to the physical node having a correspondence with a third target hash node on the preset hash ring being changed from a fifth target physical node to a sixth target physical node, data in the withdrawal message database and the delayed message database on the fifth target physical node is migrated to the sixth target physical node.

Exemplarily, in response to the physical node having a correspondence with hash node 6 on the preset hash ring shown in Fig. 8 being changed from physical node 3 to physical node 4, data in the withdrawal message database and the delayed message database on physical node 3 needs to be migrated to physical node 4, such that subsequently, in response to the message withdrawal request being received, the data may be read from the changed physical node 4, thereby maintaining the data consistency in the physical node.

In actual application, after the mapping association between the physical node and the hash node changes, first, receiving the withdrawal message request needs to be suspended. After the data on the original physical node is migrated to the changed physical node, receiving the withdrawal message request is resumed, and the withdrawal message request is processed.

In an optional implementation, after the capacity expansion operation or the capacity reduction operation is completed, the physical node corresponding to the hash node on the preset hash ring may change, but some historical data may still be stored in the original physical node. At this time, the data cannot be read in the new physical node. Therefore, the embodiment of the present disclosure may further determine the physical node corresponding to the hash node based on the historical physical node list corresponding to the hash node, thereby maintaining the data consistency.

In the embodiment of the present disclosure, in response to the message withdrawal request being received, first, a hash value is calculated based on the target service parameter in the message withdrawal request, and a hash node on the preset hash ring that corresponds to the hash value is determined as a second target hash node. Then, a physical node corresponding to the second target hash node is determined, based on the historical physical node list corresponding to the second target hash node, as the second target physical node.

The historical physical node list includes a change record of the physical node corresponding to the second target hash node, for example, a physical node corresponding to hash node 6 before a specific time point is physical node 3, and a physical node corresponding to hash node 6 after the time point is physical node 4.

In another optional implementation, only the latest allocated physical node corresponding to the second target hash node may be recorded. In a case that the delayed message corresponding to the withdrawal message request cannot be queried in the database of the latest allocated physical node, the withdrawal message request is broadcast and distributed to each physical node in the distributed cluster, and each physical node queries a delayed message database of each physical node to determine the physical node corresponding to the message withdrawal request, such that subsequently, the delayed message indicated to be withdrawn by the message withdrawal request is recorded in the withdrawal message database on the physical node.

It may be seen that the embodiment of the present disclosure may use the node capacity expansion manner based on data migration to manage the data in each physical node on the distributed cluster, thereby maintaining the data consistency in the distributed database.

To implement the foregoing embodiments, the present disclosure further provides an apparatus for message processing based on a message queue system. Fig. 9 is a schematic diagram of a structure of an apparatus for message processing based on a message queue system according to an embodiment of the present disclosure. The apparatus may be implemented by software and/or hardware, and may generally be integrated into an electronic device. As shown in Fig. 9, the apparatus includes a first receiving module 901, a first determination module 902 and a discarding module 903.

The first receiving module 901 is configured to receive a message withdrawal request sent by a producer of a message queue in the message queue system, determine a delayed message indicated to be withdrawn by the message withdrawal request as a message to be withdrawn, and record the message to be withdrawn in a withdrawal message database. The withdrawal message database is configured to record a delayed message that is in a delayed message database and is the message to be withdrawn, and the delayed message database stores a delayed message with a delay time.

The first determination module 902 is configured to determine, in response to a delay time of the first delayed message in the delayed message database expiring, whether the withdrawal message database includes a first delayed message.

The discarding module 903 is configured to discard the first delayed message in response to the withdrawal message database including the first delayed message.

In an optional implementation, the apparatus further includes a sending module configured to send the first delayed message to a target message queue in response to the withdrawal message database not including the first delayed message, such that the first delayed message is read from the target message queue and is processed by a consumer of the target message queue.

In an optional implementation, the message withdrawal request carries a target service parameter used to indicate a withdrawal of a delayed message matching with the target service parameter; and the first determination module includes a first determination submodule. The first determination submodule is configured to match the target service parameter from the delayed message database, and determine a delayed message that is hit by the matching as the message to be withdrawn.

In an optional implementation, the message withdrawal request further carries an expiration time condition used to determine, based on an expiration time of a delayed message, the delayed message indicated to be withdrawn by the message withdrawal request; and the first determination module includes a second determination submodule.

The second determination submodule is configured to match the target service parameter from the delayed message database, and determine, as the message to be withdrawn, a delayed message of which an expiration time meets the expiration time condition in the delayed messages that are hit by the matching.

In an optional implementation, the apparatus further includes a second determination module and a first storage module.

The second determination module is configured to receive a second delayed message, and determine a physical node corresponding to the second delayed message from a distributed cluster based on a preset routing policy, and use the physical node as a first target physical node. Each physical node in the distributed cluster is deployed with a withdrawal message database and a delayed message database, respectively.

The first storage module is configured to store the second delayed message in a delayed message database on the first target physical node.

In an optional implementation, the apparatus further includes a third determination module configured to determine a physical node corresponding to the message withdrawal request from the distributed cluster based on the preset routing policy, as a second target physical node.

Accordingly, the first receiving module includes a first recording submodule configured to record the message to be withdrawn in a withdrawal message database on the second target physical node.

In an optional implementation, the third determination module includes a third determination submodule and a fourth determination submodule.

The third determination submodule is configured to calculate a hash value based on the target service parameter in the second delayed message, and determine a hash node corresponding to the hash value on a preset hash ring, as a first target hash node. Each hash node in the preset hash ring respectively has a corresponding hash value range and a corresponding physical node.

The fourth determination submodule is configured to determine a physical node corresponding to the first target hash node as the first target physical node.

In an optional implementation, the third determination module includes a fifth determination submodule and a sixth determination submodule.

The fifth determination submodule is configured to calculate a hash value based on the target service parameter in the message withdrawal request, and determine a hash node corresponding to the hash value on the preset hash ring, as a second target hash node.

The sixth determination submodule is configured to determine, based on a historical physical node list corresponding to the second target hash node, a physical node corresponding to the second target hash node, as the second target physical node. The historical physical node list includes a change record of the physical node corresponding to the second target hash node.

In an optional implementation, the apparatus further includes a second receiving module and a second storage module.

The second receiving module is configured to receive a third delayed message, and determine a physical node corresponding to the third delayed message from a distributed cluster based on a random policy, as a third target physical node. Each physical node in the distributed cluster is deployed with a withdrawal message database and a delayed message database, respectively.

The second storage module is configured to store the third delayed message in a delayed message database on the third target physical node.

The first receiving module, the apparatus further includes a broadcast distribution module configured to broadcast and distribute the message withdrawal request to each physical node in the distributed cluster, and query, by each physical node, a delayed message database of each physical node to determine a physical node corresponding to the message withdrawal request, as a fourth target physical node.

Accordingly, the first receiving module includes a second recording submodule configured to record the message to be withdrawn in a withdrawal message database on the fourth target physical node.

In an optional implementation, the apparatus further includes a migration module configured to, in response to a physical node having a correspondence with a third target hash node on a preset hash ring being changed from the fifth target physical node to the sixth target physical node, migrate data in a withdrawal message database and a delayed message database on the fifth target physical node to the sixth target physical node.

In the apparatus for message processing based on the message queue system according to the embodiment of the present disclosure, first, a message withdrawal request sent by a producer of a message queue in the message queue system is received, a delayed message indicated to be withdrawn by the message withdrawal request is determined as a message to be withdrawn, and the message to be withdrawn is recorded in a withdrawal message database. The withdrawal message database is configured to record a delayed message that is in a delayed message database and is the message to be withdrawn, and the delayed message database stores a delayed message with a delay time. It is determined, in response to the delay time of the first delayed message in the delayed message database expiring, whether the withdrawal message database includes a first delayed message. In response to the withdrawal message database including the first delayed message, which indicates that the first delayed message has been withdrawn, the first delayed message is discarded.

In the embodiment of the present disclosure, after the message withdrawal request is received, the delayed message indicated to be withdrawn by the message withdrawal request is determined as the message to be withdrawn and recorded in the withdrawal message database, such that the withdrawal function for the delayed message is implemented. Since the embodiment of the present disclosure supports withdrawal of the delayed message, after the delayed message expires, it may be determined, by querying the withdrawal message database, whether the delayed message has been withdrawn, and the delayed message is discarded in response to determining that the delayed message has been withdrawn. Compared with a message system that does not support the withdrawal function for the delayed message, the method for message processing based on the message queue system according to the embodiment of the present disclosure may reduce resource occupancy.

The apparatus for message processing based on the message queue system according to the embodiment of the present disclosure may perform the method for message processing based on the message queue system according to any embodiment of the present disclosure, and has corresponding functional modules for performing the method and beneficial effects.

In addition to the foregoing method and apparatus, an embodiment of the present disclosure further provides a computer-readable storage medium, where instructions are stored in the computer-readable storage medium, and the instructions, when run on a terminal device, cause the terminal device to implement the method for message processing based on the message queue system according to the embodiment of the present disclosure.

An embodiment of the present disclosure further provides a computer program product, where the computer program product includes computer programs/instructions which, when executed by a processor, implement the method for message processing based on the message queue system according to the embodiment of the present disclosure.

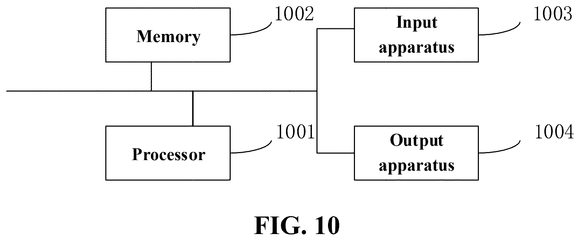

In addition, an embodiment of the present disclosure further provides a device for message processing based on a message queue system. With reference to Fig. 10, the device for message processing may include: a processor 1001, a memory 1002, an input apparatus 1003, and an output apparatus 1004. The number of processors 1001 in the device for message processing based on the message queue system may be one or more. In Fig. 10, one processor is used as an example. In some embodiments of the present disclosure, the processor 1001, the memory 1002, the input apparatus 1003, and the output apparatus 1004 may be connected through a bus or in another manner. In Fig. 10, connection through a bus is used as an example.

The memory 1002 may be used to store a software program and a module. The processor 1001 executes various functional applications and data processing of the device for message processing based on the message queue system by running the software program and the module that are stored in the memory 1002. The memory 1002 may mainly include a program storage area and a data storage area, where the program storage area may store an operating system, an application program required by at least one function, and the like. In addition, the memory 1002 may include a high-speed random access memory, and may also include a nonvolatile memory, for example, at least one magnetic disk storage device, a flash memory device, or another volatile solid-state storage device. The input apparatus 1003 may be used to receive input digital or character information, and generate a signal input related to user settings and function control of the device for message processing based on the message queue system.

Specifically, in this embodiment, the processor 1001 loads an executable file corresponding to a process of one or more application programs into the memory 1002 according to the following instructions, and the processor 1001 runs the application programs stored in the memory 1002, to implement the foregoing various functions of the device for message processing based on the message queue system.

It should be noted that in this specification, relational terms such as "first" and "second" are used only to distinguish one entity or operation from another entity or operation, and do not necessarily require or imply any actual relationship or order between these entities or operations. Moreover, the terms "include/comprise", "have", or any other variant thereof are intended to cover non-exclusive inclusion, such that a process, method, object, or device that includes a list of elements includes not only those elements, but also other elements not explicitly listed or elements inherent to such a process, method, object, or device. Without further restrictions, an element defined by the phrase "including a" does not exclude the existence of another identical element in the process, method, object, or device that includes the element.

The foregoing descriptions are merely specific implementations of the present disclosure, so that those skilled in the art may understand or implement the present disclosure. Various modifications to these embodiments will be apparent to those skilled in the art, and the generic principles defined herein may be implemented in other embodiments without departing from the scope of the present disclosure. Therefore, the present disclosure is not limited to the embodiments described herein, but is to be accorded the widest scope consistent with the principles and novel features disclosed herein.

## Claims

1. A method for message processing based on a message queue system, comprising:
receiving a message withdrawal request sent by a producer of a message queue in the message queue system, determining a delayed message indicated to be withdrawn by the message withdrawal request as a message to be withdrawn, and recording the message to be withdrawn in a withdrawal message database, the withdrawal message database being configured to record a delayed message that is in a delayed message database and is the message to be withdrawn, and the delayed message database storing a delayed message with a delay time (S101);
determining, in response to a delay time of a first delayed message in the delayed message database expiring, whether the withdrawal message database comprises the first delayed message (S102); and
discarding the first delayed message in response to the withdrawal message database comprising the first delayed message (S103).

2. The method of claim 1, further comprising:
sending the first delayed message to a target message queue in response to the withdrawal message database not comprising the first delayed message, such that the first delayed message is read from the target message queue and is processed by a consumer of the target message queue.

3. The method of claim 1, wherein the message withdrawal request carries a target service parameter used to indicate a withdrawal of a delayed message matching with the target service parameter, and determining the delayed message indicated to be withdrawn by the message withdrawal request as the message to be withdrawn comprises:
matching the target service parameter from the delayed message database, and determining a delayed message that is hit by the matching as the message to be withdrawn.

4. The method of claim 3, wherein the message withdrawal request further carries an expiration time condition used to determine, based on an expiration time of a delayed message, the delayed message indicated to be withdrawn by the message withdrawal request, and determining the delayed message indicated to be withdrawn by the message withdrawal request as the message to be withdrawn comprises:
matching the target service parameter from the delayed message database, and determining, as the message to be withdrawn, a delayed message of which an expiration time meets the expiration time condition in the delayed messages that are hit by the matching.

5. The method of claim 1, further comprising:
receiving a second delayed message, and determining a physical node corresponding to the second delayed message from a distributed cluster based on a preset routing policy, as a first target physical node (S401), each physical node in the distributed cluster being deployed with a withdrawal message database and a delayed message database, respectively; and
storing the second delayed message in a delayed message database on the first target physical node (S402).

6. The method of claim 5, wherein after receiving the message withdrawal request sent by the producer of the message queue in the message queue system, the method further comprises:
determining a physical node corresponding to the message withdrawal request from the distributed cluster based on the preset routing policy, as a second target physical node (S602); and
recording the message to be withdrawn in the withdrawal message database, comprises:
recording the message to be withdrawn in a withdrawal message database on the second target physical node (S603).

7. The method of claim 5 or 6, wherein determining the physical node corresponding to the delayed message from the distributed cluster based on the preset routing policy as the first target physical node comprises:
calculating a hash value based on a target service parameter in the second delayed message, and determining a hash node corresponding to the hash value on a preset hash ring as a first target hash node, each hash node in the preset hash ring respectively having a corresponding hash value range and a corresponding physical node; and
determining a physical node corresponding to the first target hash node as the first target physical node.

8. The method of claim 7, wherein determining the physical node corresponding to the message withdrawal request from the distributed cluster based on the preset routing policy as the second target physical node comprises:
calculating a hash value based on the target service parameter in the message withdrawal request, and determining a hash node corresponding to the hash value on the preset hash ring as a second target hash node; and
determining, based on a historical physical node list corresponding to the second target hash node, a physical node corresponding to the second target hash node, as the second target physical node, the historical physical node list comprising a change record of the physical node corresponding to the second target hash node.

9. The method of claim 1, further comprising:
receiving a third delayed message, and determining a physical node corresponding to the third delayed message from a distributed cluster based on a random policy as a third target physical node, each physical node in the distributed cluster being deployed with a withdrawal message database and a delayed message database, respectively; and
storing the third delayed message in a delayed message database on the third target physical node.

10. The method of claim 9, wherein after receiving the message withdrawal request, the method further comprises:
broadcasting and distributing the message withdrawal request to each physical node in the distributed cluster, and querying, by each physical node, a delayed message database of each physical node to determine a physical node corresponding to the message withdrawal request, as a fourth target physical node; and
recording the message to be withdrawn in the withdrawal message database, comprises:
recording the message to be withdrawn in a withdrawal message database on the fourth target physical node.

11. The method of claim 1, further comprising:
in response to a physical node having a correspondence with a third target hash node on a preset hash ring being changed from a fifth target physical node to a sixth target physical node, migrating data in a withdrawal message database and a delayed message database on the fifth target physical node to the sixth target physical node.

12. An apparatus for message processing based on a message queue system, comprising:
a first receiving module (901) configured to receive a message withdrawal request sent by a producer of a message queue in the message queue system, determine a delayed message indicated to be withdrawn by the message withdrawal request as a message to be withdrawn, and record the message to be withdrawn in a withdrawal message database, the withdrawal message database being configured to record a delayed message that is in a delayed message database and is the message to be withdrawn, and the delayed message database storing a delayed message with a delay time;
a first determination module (902) configured to determine, in response to a delay time of a first delayed message in the delayed message database expiring, whether the withdrawal message database comprises the first delayed message; and
a discarding module (903) configured to discard the first delayed message in response to the withdrawal message database comprising the first delayed message.

13. An electronic device, comprising:
a processor; and
a memory configured to store instructions executable by the processor,
wherein the processor is configured to read the executable instructions from the memory, and execute the instructions to implement the method for message processing based on the message queue system of any of claims 1 to 11.

14. A computer-readable storage medium, wherein the storage medium stores computer programs, and the computer programs are configured to perform the method for message processing based on the message queue system of any of claims 1 to 11.

15. A computer program product, wherein the computer program product comprises computer programs/instructions which, when executed by a processor, implement the method of any of claims 1 to 11.
